# EUROPEAN PATENT APPLICATION

(11) **EP 4 831 437 A2**
(43) Date of publication of application: **28.10.2026**
(21) Application number: 26174064.1
(22) Date of filing: 22.04.2026
(51) Int. Cl.: F01D 5/08, F01D 5/30

(54) **ROTOR BLADE ASSEMBLY FOR A GAS TURBINE ENGINE, ROTATIONAL ASSEMBLY FOR A GAS TURBINE ENGINE, AND ROTOR ASSEMBLY**

(30) Priority: 24.04.2025 US 202519188500
(71) Applicant: Pratt & Whitney Canada Corp., Longueuil, Québec J4G 1A1 (CA)
(72) Inventor: SREEKANTH, Sri, (01BE5) Longueuil, J4G 1A1 (CA); LAO, Si-Man, (01BE5) Longueuil, J4G 1A1 (CA); LEBEL, Larry, (01BE5) Longueuil, J4G 1A1 (CA)
(74) Representative: Dehns

(57) **Abstract**

A rotor blade assembly for a gas turbine engine includes a rotor blade and a sealing insert (114). The rotor blade includes an airfoil (78), a platform (80), and a root (70). The airfoil (78) extends from the platform (80) to a blade tip. The platform (80) extends between the airfoil (78) and the root (70). The root (70) extends axially along an axis (30) between a forward face (74A) and an aft face (74B), and extends radially from a root base (94) to the platform (80). The root (70) includes first and second tabs (98, 100). Each tab (98, 100) projects from the root base (94) to tab ends (102A, 102B). The second tab (100) is spaced from the first tab (98) forming a gap (104). The sealing insert (114) is disposed within the gap (104). The sealing insert (114) extends radially within the gap (104) from an outer radial surface adjacent (122) the root base (94) to an inner radial surface (120) located radially inboard of at least one of the first or second tab ends (102A, 102B).

A rotational assembly for a gas turbine engine (20) includes a rotor disk (62; 66), the rotor blade (76), a cooling air passage (108) and the sealing insert (114). The rotor disk (62; 66) extends axially along an axis (30) between ends (74A, 74B), and includes a disk surface (109). The cooling air passage (108) extends axially along the axis (30), the disk surface (109) forming an inner peripheral boundary of the cooling air passage (108), and the root base (94) forming an outer peripheral boundary of the cooling air passage (108). The sealing insert (114) is disposed between the tabs (98, 100), and extends radially within the cooling air passage (108) from the inner peripheral boundary to the outer peripheral boundary.

A rotor assembly includes the rotor disk (62; 66), the cooling air passage (108), the rotor blade the rotor blade (76), and the sealing insert (114).

## Description

### BACKGROUND OF THE INVENTION

### 1. Technical Field

The present disclosure relates to a rotor assembly sealing insert, in general, and to a rotor assembly sealing insert for use in a turbine rotor assembly, in particular.

### 2. Background Information

Bladed rotors included in rotor assemblies receive cooling fluid through passages formed between a rotor disc and the bladed rotor. Often, bladed rotors include projections or tabs which extend within these passages to limit the leakage of cooling fluid to the outside of the assembly. Due to machining tolerances of the tabs, however, some degree of leakage exists in these rotor assemblies. While conventional sealing assemblies for use in rotor assemblies are known, there is room in the art for further improvements.

### SUMMARY

According to an aspect of the present disclosure, a rotor blade assembly for a gas turbine engine is provided. The rotor blade assembly includes a rotor blade and a sealing insert. The rotor blade includes an airfoil, a platform, and a root. The airfoil extends from the platform to a blade tip. The platform extends between the airfoil and the root. The root extends axially along an axis between a forward face and an aft face. The root extends radially from a root base to the platform. The root includes a first tab and a second tab. The first tab projects from the root base to a first tab end. The second tab projects from the root base to a second tab end. The second tab is spaced from the first tab and forms a gap therebetween. The sealing insert is disposed within the gap. The sealing insert extends radially within the gap from an outer radial surface adjacent the root base to an inner radial surface located radially inboard of at least one of the first tab end or the second tab end.

In any of the aspects or examples described above and herein, at least a portion of the sealing insert is configured to radially compress within the gap.

In any of the aspects or examples described above and herein, the sealing insert includes an insert base and a plurality of bristles. The insert base is disposed at the outer radial surface. The plurality of bristles extend from the insert base to bristle ends. The bristle ends are disposed at the inner radial surface.

In any of the aspects or examples described above and herein, the sealing insert includes an aft surface extending between the inner radial surface and the outer radial surface. The sealing insert may extend between lateral ends. The inner radial surface may include a plurality of ribs extending between lateral ends. A relief slot may extend between a first of the plurality of ribs and a second of the plurality of ribs.

In any of the aspects or examples described above and herein, the rotor blade includes an interior channel extending from the root base towards the blade tip. The interior channel is disposed axially forward of the first tab and the second tab. The rotor assembly may further include a rotor disk and a cooling air passage. The rotor disk may extend axially along the axis between ends. The rotor disk may be configured to rotate about the axis. The cooling air passage may extend axially along the axis. The cooling air passage may include a radial length extending radially between a rotor disk surface and the blade root. The cooling air passage may be configured to deliver cooling air to the interior channel. The first tab and the second tab may extend radial within a portion of the radial length of the cooling air passage. The sealing insert may extend the radial length of the cooling air passage.

In any of the aspects or examples described above and herein, the sealing insert may extend beyond the radial length of the cooling air passage,

In any of the aspects or examples described above and herein, a leakage flowpath may be formed between an inner peripheral boundary of the cooling air passage and at least one of the first tab end and the second tab end. The sealing insert may be configured to deflect the leakage flowpath towards the interior channel.

According to an aspect of the present disclosure, a rotational assembly for a gas turbine engine is provided. The rotational assembly includes a rotor disk, a rotor blade, a cooling air passage, and a sealing insert. The rotor disk extends axially along an axis between ends and includes a disk surface. The rotor blade extends axially along the axis. The rotor blade includes an airfoil and a root. The root includes tabs extending from a root base to tab ends. The cooling air passage extends axially along the axis. The disk surface forms an inner peripheral boundary of the cooling air passage, and the root base forms an outer peripheral boundary of the cooling air passage. The sealing insert is disposed between the tabs. The sealing insert extends radially within the cooling air passage from the inner peripheral boundary to the outer peripheral boundary.

In any of the aspects or examples described above and herein, the sealing insert includes an outer radial surface and an inner radial surface. The outer radial surface contacts the outer peripheral boundary and inner radial surface contacts the inner peripheral boundary. At least a portion of the sealing insert may be configured to radially compress between the inner radial surface and the outer radial surface.

In any of the aspects or examples described above and herein, the cooling air passage includes a radial length extending between the inner peripheral boundary and the outer peripheral boundary. The sealing insert may be oversized relative to the radial length.

In any of the aspects or examples described above and herein, the sealing insert includes an insert base and a plurality of bristles. The insert base may be disposed at the outer radial surface. The plurality of bristles may extend from the insert base to bristle ends disposed at the inner radial surface.

In any of the aspects or examples described above and herein, the sealing insert includes an aft surface extending between the inner radial surface and the outer radial surface. The sealing insert may extend between lateral ends. The inner radial surface may include a plurality of ribs extending between lateral ends. A relief slot may extend between a first of the plurality of ribs and a second of the plurality of ribs.

In any of the aspects or examples described above and herein, the rotor blade includes an interior channel extending from the root base to the airfoil. The interior channel is disposed axially forward of the tabs. The cooling air passage is configured to deliver cooling air to the interior channel. The sealing insert may be configured to deflect air flowing along the inner peripheral boundary of the cooling air passage towards the interior channel.

According to an aspect of the present disclosure, a rotor assembly is provided. The rotor assembly includes a rotor disk, a cooling air passage, a rotor blade, and a sealing insert. The disk extends axially along an axis between ends. The rotor disk includes a disk surface. The cooling air passage extends axially along the axis. The disk surface forms an inner peripheral boundary of the cooling air passage. The rotor blade extends axially along the axis and includes an airfoil and a root. The root includes a root base. The root base includes a tab and an interior channel. The tab is disposed aft of the interior channel and extends from the root base radially within the cooling air passage. The sealing insert extends radially within the cooling air passage and contacts the inner peripheral boundary. The sealing insert is disposed aft of the tab and the interior channel.

In any of the aspects or examples described above and herein, the rotor assembly is disposed within a turbine section of a gas turbine engine.

The foregoing features and elements may be combined in various combinations without exclusivity, unless expressly indicated otherwise. For example, aspects and/or examples of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic view of a gas turbine engine embodiment.
FIG. 2 is a diagrammatic partial view of a gas turbine engine turbine section.
FIG. 3 is a diagrammatic view of a rotor blade.
FIG. 4 is a partial sectional view of a rotor blade.
FIG. 5 is an enlarged sectional view of a present disclosure rotor assembly.
FIG. 6 is a diagrammatic view of a rotor assembly.
FIG. 7 is a diagrammatic view of a sealing insert, according to an embodiment of the present disclosure.
FIG. 8 is an enlarged sectional view of a present disclosure rotor assembly, displaying the sealing insert of FIG. 7.
FIG. 9 is a diagrammatic view of a sealing insert, according to an embodiment of the present disclosure
FIG. 10 is an enlarged sectional view of a present disclosure rotor assembly, displaying the sealing insert of FIG. 9.

### DETAILED DESCRIPTION

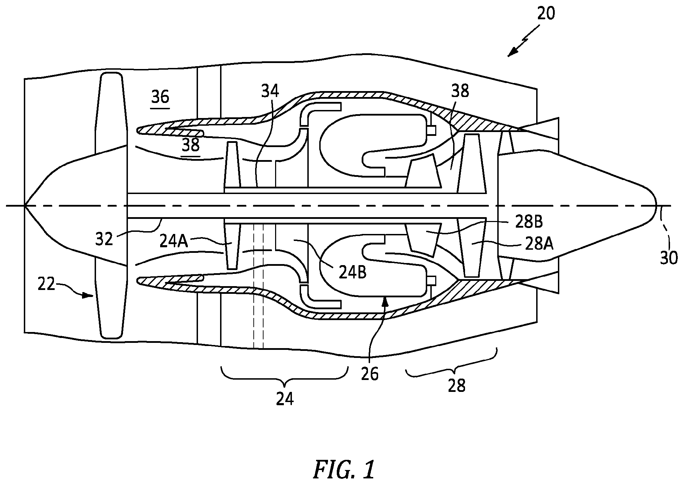

FIG. 1 diagrammatically illustrates an example of a gas turbine engine 20 that includes a fan section 22, a compressor section 24, a combustor section 26, and a turbine section 28 disposed relative to an axial centerline / rotational axis 30. The compressor section 24 includes a low pressure compressor (LPC 24A) and a high pressure compressor (HPC 24B). The turbine section 28 includes a low pressure turbine (LPT 28A) and a high pressure turbine (HPT 28B). A low speed shaft 32 connects the fan section 22, the LPC 24A and the LPT 28A. A high speed shaft 34 connects the HPC 24B and the HPT 28B. The low speed shaft 32 and the high speed shaft 34 are mounted for rotation about the axial centerline / rotational axis 30. The low speed shaft 32 may drive the fan section 22 directly or through a geared architecture; e.g., to drive the fan section 22 at a lower rotational speed than the low speed shaft 32. The LPC 24A, HPC 24B, LPT 28A, and the HPT 28B may each include one or more rotor stages and one or more stator vane stages. Air entering the engine 20 passes through the fan section 22. A first portion of the air exiting the fan section 22 enters a bypass flow path 36 and a second portion enters the engine core and travels through a core gas path 38. Air traveling within the core gas path 38 first encounters the compressor section 24 and is subsequently passed to the combustor section 26 wherein fuel is mixed with the air and is combusted. Non-combusted air and gaseous byproducts of the combustion exit the combustor section 26 and pass through the turbine section 28 before exiting the engine 20. To facilitate the description herein, air or gaseous combustion products, or any combination thereof will be referred to as "core gas" hereinafter, unless noted otherwise. Although diagrammatically shown as a turbofan in FIG. 1, the present disclosure may be used with other gas turbine engine 20 architectures such as turbojets, turboshafts, and the like. The present disclosure is not, therefore, limited to use with any particular gas turbine engine architecture.

The gas turbine engine 20 according to the present invention may be used to produce power for an aircraft or may be used in a land-based application. The aircraft may be an airplane, a helicopter, a drone (e.g., an unmanned aerial vehicle (UAV)) or any other manned or unmanned aerial vehicle or system.

The terms "forward", "leading", "aft", and "trailing" are used herein to indicate the relative position of a component or surface. A "leading edge" of a rotor blade encounters core gas flow before the "trailing edge" of the same. When referring to an axial flow gas turbine engine 20 like that shown in FIG. 1, a "forward" or "upstream" component encounters core gas flow prior to an "aft" or "downstream" second component; e.g., the compressor section 24 is forward / upstream of the combustor section 26, and the turbine section 28 is aft/downstream of the combustor section 26. The terms "inner radial" and "outer radial" refer to relative radial positions from the engine 20 centerline; e.g., an inner radial component is disposed radially closer to the centerline than an outer radial component.

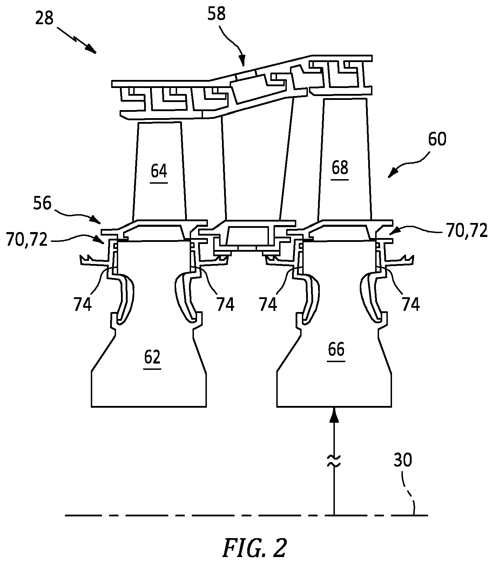

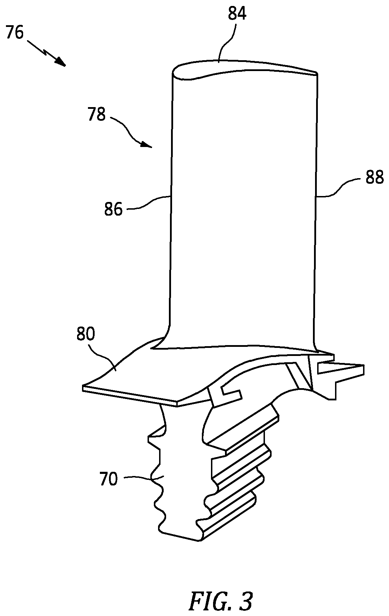

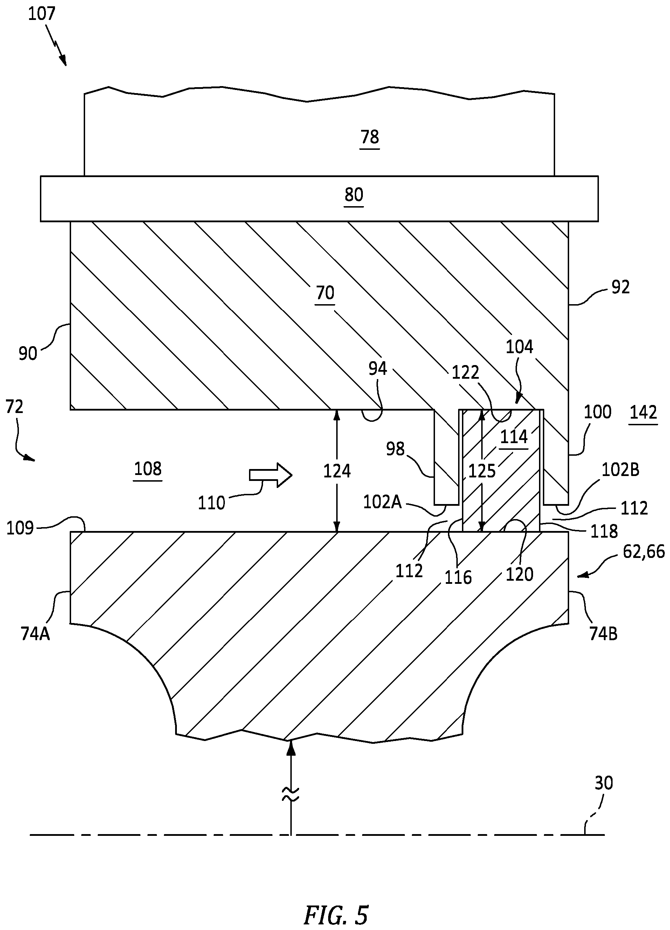

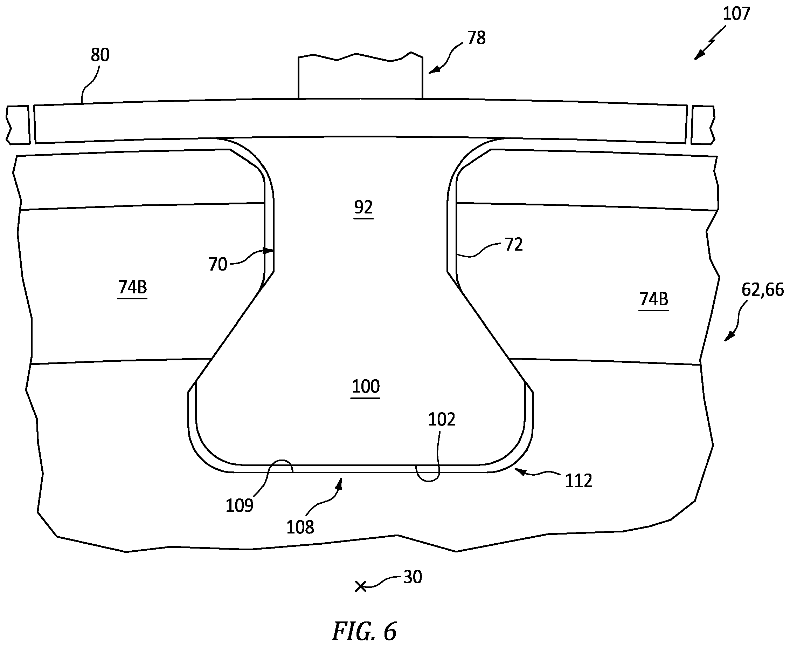

The LPC 24A, HPC 24B, HPT 28B, and LPT 28A each include one or more rotor stages. Each rotor stage includes a rotor and a stator. FIG. 2 diagrammatically illustrates a portion of a turbine section 28 that includes a first turbine rotor 56, a first turbine stator 58, and a second turbine rotor 60. The first and second turbine rotors 56, 60 are rotatable about a rotational axis; e.g., the axial centerline 30 of the gas turbine engine 20. To facilitate the description herein, the rotational axis of the rotor stages 56, 60 will be described herein as being coincident with the axial centerline 30 of the gas turbine engine 20, but the present disclosure does not require the rotational axis to be coincident with the axial centerline 30 of the gas turbine engine 20. A first turbine stator 58 is disposed axially between the first turbine rotor 56 and the second turbine rotor 60; i.e., the first turbine stator 58 is disposed aft of the first turbine rotor 56 and forward of the second turbine rotor 60. The first turbine rotor 56 has a first disk 62 and a plurality of first turbine blades 64 extending radially out from the first disk 62, disposed around the circumference of the first disk 62. The second turbine rotor 60 has a second disk 66 and a plurality of second turbine blades 68 extending radially out from the second disk 66, disposed around the circumference of the second disk 66. The first and second rotor blades 64, 68 may be attached to the respective first and second disks 62, 66 by a mechanical attachment configuration; e.g., each turbine blade 64, 68 may include a blade root 70 (e.g., see FIG. 3) that is received within a mating slot 72 (e.g., see FIG. 6) disposed within the respective disk 62, 66. The mating slot, for example, extends between ends 74 of the respective disk 62, 66 (e.g., between a forward end 74A and an aft end 74B of the respective disk 62, 66; see FIGS. 5, 6, 8 and 10). The present disclosure is not limited to any particular attachment configuration between the first rotor blades 64 and the first disk 62, or any particular attachment configuration between the second rotor blades 68 and the second disk 66.

FIG. 3 diagrammatically illustrates a rotor blade 76 such as those included in the first turbine rotor 56 and the second turbine rotor 60 (see FIG. 2). This non-limiting example of a rotor blade 76 includes an airfoil 78, a platform 80, and a root 70. In some embodiments, the rotor blade 76 according to the present disclosure may not include a platform 80. The airfoil 78 has a span that extends from the platform 80 (the platform 80 is located at a base of the airfoil 78) to the blade tip 84 and a chord that extends from a leading edge 86 to a trailing edge 88. The root 70 extends radially between a root base 94 of the rotor blade 76 and the platform 80.

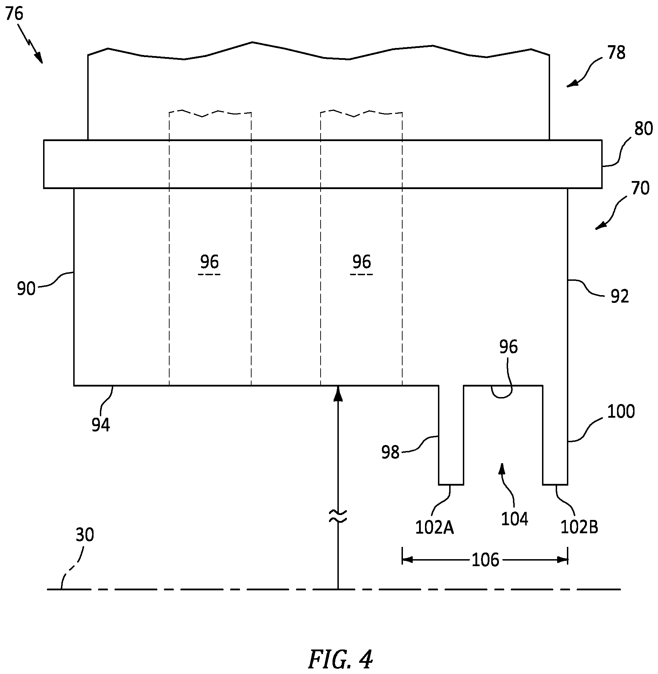

Referring to FIG. 4, the root 70 extends axially along the axial centerline 30 between a forward end 90 and an aft end 92. The root includes one or more interior channels 96 that allow passage of cooling air through the root and into the airfoil 78 for providing cooling air to the rotor blade. The present disclosure is not limited to any particular number of root interior channels 96 or any particular root interior channel 96 configuration.

The root 70 may include a first tang or tab 98 and a second tab 100 extending therefrom. The first tab 98 extends from the root base 94 to a first tab end 102A and the second tab 100 extends from the root base 94 to a second tab end 102B (the first tab end 102A and the second tab end 102B referred to generally as "tab end(s) 102"). The first tab 98 may be axially spaced from the second tab 100, forming a gap 104 therebetween. The first and second tabs 98 and 100 may be disposed along the axial centerline in a downstream section 106 of the root, rearward of the interior channel(s) 96.

FIGS. 5 and 6 diagrammatically illustrate a rotor assembly 107 including the blade root inserted into the mating slot of the disk. A cooling air passage 108 extends axially along the centerline within the mating slot between the disk forward end 74A and the disk aft end 74B. The cooling air passage 108 extends radially between the disk and the root for the delivery of cooling air to the rotor blade. The cooling air passage 108, for example, extends radially between a disk surface 109 of the disk and the root base 94. The disk surface 109 forms an inner peripheral boundary of the cooling air passage 108. The root base 94 forms an outer peripheral boundary of the cooling air passage 108. A flowpath 110 extends within the cooling air passage 108 between the root forward end 90 to the root aft end 92. The flowpath 110 is configured in fluid communication with the interior channels 96 for the delivery of cooling air to the rotor blade.

To prevent striking of the tabs with the disk surface 109, the tabs ends are configured to extend only within a portion of the cooling air passage 108, creating an opening 112 at the inner peripheral boundary between the tab ends 102 and the disk surface 109. The opening 112 introduces a flowpath leakage, thereby reducing blade durability and increasing performance losses. Referring to FIG. 5, a sealing insert 114 is provided in gap 104 between the first tab 98 and the second tab 100 to inhibit (e.g., mitigate, block, prevent) flowpath leakage.

Referring to FIGS. 5, 7 and 8, the sealing insert 114 extends within the gap 104 between a forward surface 116 and a rearward surface 118. The sealing insert 114 extends from an inner radial surface 120 to an outer radial surface 122. The sealing insert 114 of FIG. 5, for example, extends radially within the cooling air passage 108 such that the sealing insert 114 contacts the root base 94 at the outer radial surface 122 and contacts the disk surface 109 at the inner radial surface 120. When placed within the rotor assembly 107, the sealing insert 114 extends from the outer radial surface 122 at a position adjacent (e.g., in contact with) the rotor base, to a position radially inboard of the tab ends 102 (e.g., in contact with the disk surface 109), such that the sealing insert 114 extends within the opening 112 and along a radial length 124 of the cooling air passage 108. The sealing insert 114, for example, may include a radial insert length 125 which is greater than (e.g., oversized relative to) the radial length 124 of the cooling air passage 108. In such a configuration, at least a portion of the sealing insert 114 may be configured to radially compress within the gap 104. The sealing insert 114 is sized to fit between the first tab 98 and the second tab 100, and may engage the gap 104 in a clearance or transition engagement fit.

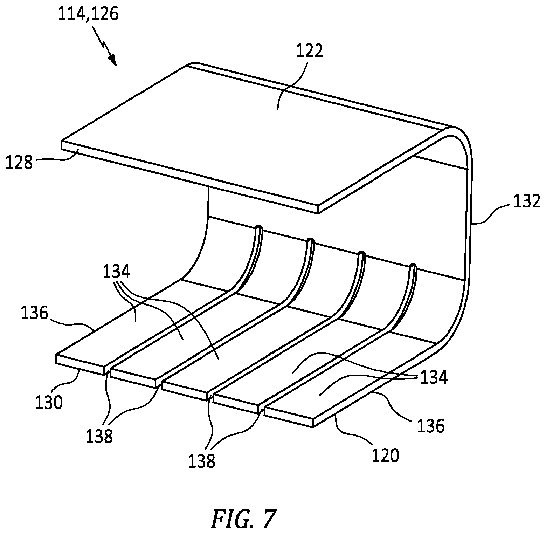

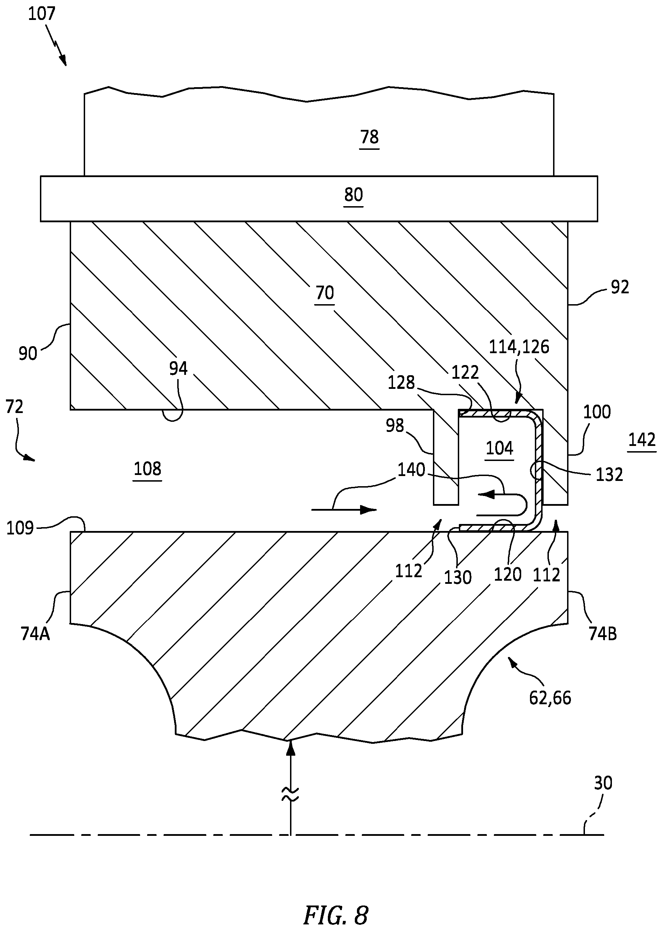

FIGS. 7 and 8 diagrammatically illustrates the sealing insert 114 of the rotor assembly 107 according to an embodiment of the present invention. The sealing insert 114 of FIG. 7 is configured as a flexible insert 126 extending between the inner radial surface 120 and the outer radial surface 122. The sealing insert 114 of FIG. 7, for example, extends radially between and to an outer radial forward end 128 and an inner radial forward end 130. An aft surface 132 extends between the inner radial surface 120 and the outer radial surface 122, connecting the outer radial forward end 128 and the inner radial forward end 130, such that the flexible insert 126 is configured as a curved or C-shaped insert. Ribs 134 extend laterally along the inner radial surface 120 between lateral ends 136 of the insert. A plurality of relief slots 138 extend laterally between adjacent ribs 134. The relief slots 138 extend from the inner radial forward end 128 towards the aft surface 132. The relief slots 138 may, for example, extend within at least a portion of the aft surface 132.

The flexible insert 126 of FIG. 7 may be constructed of a high-temperature metal and/or metal alloy material. The relief slots 138 facilitate thermal expansion of the flexible insert 126, providing additional durability of the flexible insert 126 when placed within the gap 104 of the rotor assembly 107.

The flexible insert 126 of FIG. 7 is composed of a resilient material which may be deformed or compressed radially and/or axially within the gap 104 between the first tab 98 and the second tab 100. Referring to FIG. 8, when disposed within the rotor assembly 107, the insert outer radial surface 122 contacts (e.g., urges against) the root base 94 and the insert inner radial surface 120 contacts (e.g., urges against) the disk surface 109. The flexible insert 126 of FIG. 8 is secured within the gap 104 and deflects a leakage flowpath 140 moving along the inner peripheral boundary of the cooling air passage 108 from egressing the opening 112 to a rotor assembly exterior 142. While the flexible insert 126 of FIG. 8 is depicted with the forward ends 128 and 130 facing the first tab 98 and the aft surface 132 facing the second tab 100, the present disclosure should not be so limited. The flexible insert 126 of FIG. 8, for example, may be positioned in any manner which would be suitable to deflect the leakage flowpath 140 away from the rotor assembly 107.

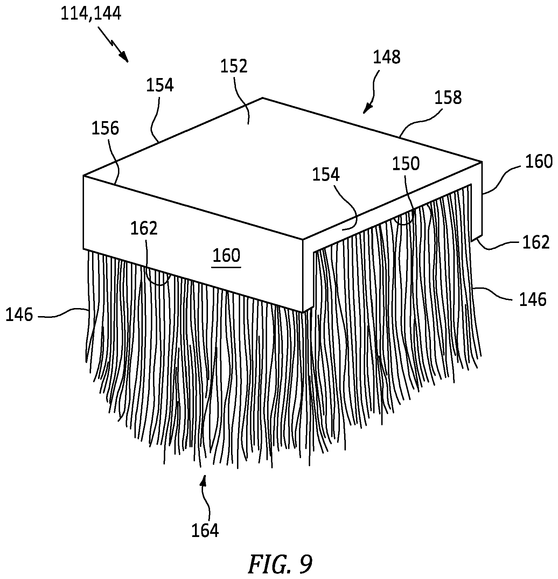

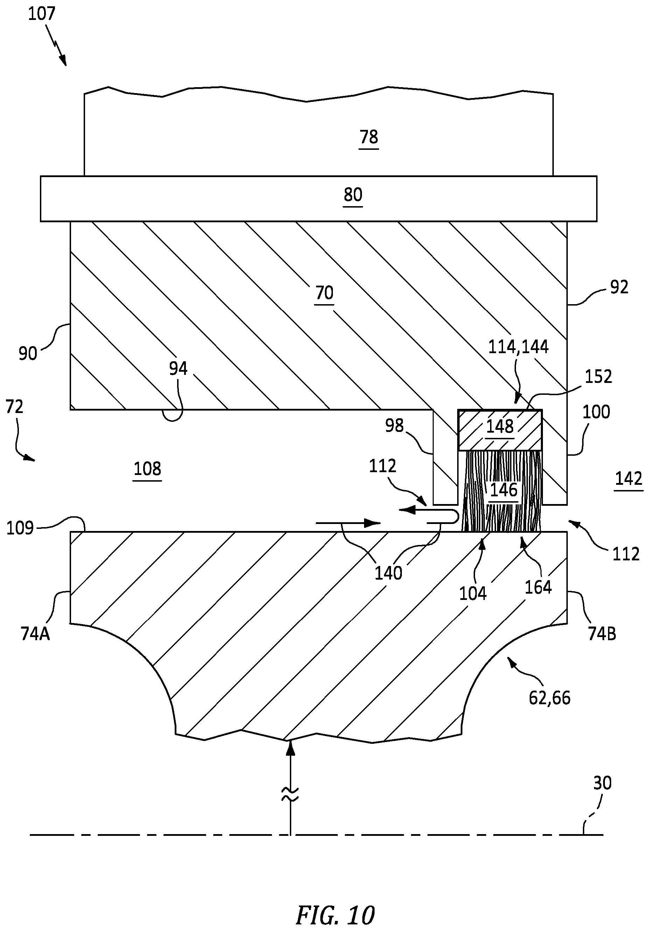

FIGS. 9 and 10 diagrammatically illustrates the rotor assembly 107 including the sealing insert 114 according to an embodiment of the present invention. The sealing insert 114 of FIG. 9 is configured as a brush insert 144. The brush insert 144 includes a plurality of bristles 146 extending from an insert base 148. The insert base 148 has a radial thickness extending between an inner radial base surface 150 and an outer radial base surface 152. The insert base 148 extends laterally between lateral ends 154, and extends longitudinally (e.g., axially) between a forward end 156 and an aft end 158. Flanges 160 extend from the insert base forward and aft ends 156 and 158 to inner radial flange ends 162. The bristles 146 are secured to (e.g., connected to) the inner radial base surface 150 and extend therefrom to bristle ends 164 located at the inner radial end of the sealing insert 114.

The bristles 146 of the brush insert 144 are formed of a high-temperature metal and/or metal alloy material. The bristles 146 may be formed from a resilient or flexible material that allows for deflection and/or compression of the bristles 146 when placed within the gap 104 of the rotor assembly 107.

Referring to FIG. 10, when the brush insert 144 is placed within the rotor assembly 107, the insert outer radial base surface 152 contacts (e.g., urges against) the root base 94 and the bristles 146 (i.e., the bristle ends 164) contact (e.g., urge against) the disk surface 109. The brush insert 144 of FIG. 10 is secured within the gap 104 and deflects the leakage flowpath 140 moving along the inner peripheral boundary of the cooling air passage 108 from egressing the opening 112 to the rotor assembly exterior 142.

During operation of the gas turbine engine 20, the rotor assembly 107 of the present disclosure will rotate about the axial centerline 30. Due to the rotation, the sealing insert 114 described in any of the embodiments disclosed herein will be urged radially outward against the root base 94 due to rotational forces applied to the insert. Furthermore, axial shifting of the insert is minimized and/or prevented, as the first and second tabs 98 and 100 act to retain the axial position of the insert within the gap 104.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A rotor blade assembly (107) for a gas turbine engine (20), including:
a rotor blade (76) including an airfoil (78), a platform (80), and a root (70);
the airfoil (78) extending from the platform (80) to a blade tip (84);
the platform (80) extending between the airfoil (78) and the root (70);
the root (70) extending axially along an axis (30) between a forward face (90) and an aft face (92), the root (70) extending radially from a root base (94) to the platform (80), the root (70) including a first tab (98) projecting from the root base (94) to a first tab end (102A) and a second tab (100) projecting from the root base (94) to a second tab end (102B), the second tab (100) spaced from the first tab (98) and forming a gap (104) therebetween; and
a sealing insert (114) disposed within the gap (104), the sealing insert (114) extending radially within the gap (104) from an outer radial surface (122) adjacent the root base (94) to an inner radial surface (120) located radially inboard of at least one of the first tab end (102A) or the second tab end (102B).

2. The rotor blade assembly of claim 1, wherein at least a portion of the sealing insert (114) is configured to radially compress within the gap (104).

3. The rotor blade assembly of claim 1 or 2, wherein the rotor blade (76) includes an interior channel (96) extending from the root base (94) towards the blade tip (84), the interior channel (96) disposed axially forward of the first tab (98) and the second tab (100).

4. The rotor blade assembly of claim 3, further comprising:
a rotor disk (62; 66) extending axially along the axis (30) between ends (74A, 74B), the rotor disk (62; 66) configured to rotate about the axis (30);
a cooling air passage (108) extending axially along the axis (30), the cooling air passage (108) including a radial length (124) extending radially between a rotor disk surface (109) and the blade root (94), and the cooling air passage (108) configured to deliver cooling air to the interior channel (96);
the first tab (98) and the second tab (100) extend radial within a portion of the radial length (124) of the cooling air passage (108); and
the sealing insert (114) extends the radial length (124) of the cooling air passage (108).

5. The rotor blade assembly of claim 4, wherein the sealing insert (114) extends beyond the radial length (124) of the cooling air passage (108).

6. The rotor blade assembly of claim 4 or 5, wherein:
a leakage flowpath (140) is formed between an inner peripheral boundary of the cooling air passage (108) and at least one of the first tab end (102A) and the second tab end (102B); and
the sealing insert (114) is configured to deflect the leakage flowpath (140) towards the interior channel (96).

7. A rotational assembly (107) for a gas turbine engine (20), including:
a rotor disk (62; 66) extending axially along an axis (30) between ends (74A, 74B), the rotor disk (62; 66) including a disk surface (109);
a rotor blade (76) extending axially along the axis (30), the rotor blade (76) including an airfoil (78) and a root (70), the root (70) including tabs (98, 100) extending from a root base (94) to tab ends (102A, 102B);
a cooling air passage (108) extending axially along the axis (30), the disk surface (109) forming an inner peripheral boundary of the cooling air passage (108), and the root base (94) forming an outer peripheral boundary of the cooling air passage (108); and
a sealing insert (114) disposed between the tabs (98, 100), the sealing insert (114) extending radially within the cooling air passage (108) from the inner peripheral boundary to the outer peripheral boundary.

8. The rotational assembly of claim 7, wherein
the sealing insert (114) includes an outer radial surface (122) and an inner radial surface (120), the outer radial surface (122) contacting the outer peripheral boundary and inner radial surface (120) contacting the inner peripheral boundary.

9. The rotational assembly of claim 8, wherein at least a portion of the sealing insert (114) is configured to radially compress between the inner radial surface (120) and the outer radial surface (122).

10. The rotational assembly of any of claims 7 to 9, wherein:
the cooling air passage (108) includes a radial length (124) extending between the inner peripheral boundary and the outer peripheral boundary; and
the sealing insert (114) is oversized relative to the radial length (124).

11. The rotor blade assembly of any of claims 1 to 6 or the rotational assembly of claim 8 or of claim 9 or 10 as dependent on claim 8, wherein:
the sealing insert (114) includes an insert base (148) and a plurality of bristles (146);
the insert base (148) disposed at the outer radial surface (122); and
the plurality of bristles (146) extend from the insert base (148) to bristle ends (164) disposed at the inner radial surface (120).

12. The rotor blade assembly of any of claims 1 to 6 or the rotational assembly of claim 8 or of claim or 10 as dependent on claim 8, wherein the sealing insert (114) includes an aft surface (132) extending between the inner radial surface (120) and the outer radial surface (122).

13. The rotor blade assembly or rotational assembly of claim 12, wherein:
the sealing insert (114) extends between lateral ends (136);
the inner radial surface includes a plurality of ribs (134) extending between lateral ends (136); and
a relief slot (138) extends between a first of the plurality of ribs (134) and a second of the plurality of ribs (134).

14. The rotational assembly of any of claims 7 to 13, wherein:
the rotor blade (76) includes an interior channel (96) extending from the root base (94) to the airfoil (78), the interior channel (96) disposed axially forward of the tabs (98, 100); and
the cooling air passage (108) is configured to deliver cooling air to the interior channel (96),
optionally wherein the sealing insert (114) is configured to deflect air flowing along the inner peripheral boundary of the cooling air passage (108) towards the interior channel (96).

15. A rotor assembly, including:
a rotor disk (62; 66) extending axially along an axis (30) between ends (74A, 74B), the rotor disk (62; 66) including a disk surface (109);
a cooling air passage (108) extending axially along the axis (30), the disk surface (109) forming an inner peripheral boundary of the cooling air passage (108);
a rotor blade (76) extending axially along the axis (30), the rotor blade (76) including an airfoil (78) and a root (70), the root (70) including a root base (94), the root base (94) including a tab (98; 100) and an interior channel (96), the tab (98; 100) disposed aft of the interior channel (96), the tab (98; 100) extending from the root base (94) radially within the cooling air passage (108); and
a sealing insert (114) extending radially within the cooling air passage (108) and contacting the inner peripheral boundary, the sealing insert (114) disposed aft of the tab (98; 100) and the interior channel (96), optionally wherein the rotor assembly is disposed within a turbine section (28) of a gas turbine engine (20).
